(19) Europäisches Patentamt
European Patent Office
Office européen des brevets

(11) EP 4 343 636 A1

(12) EUROPEAN PATENT APPLICATION

(43) Date of publication:
27.03.2024 Bulletin 2024/13

(21) Application number: 22217088.8

(22) Date of filing: 29.12.2022

(51) International Patent Classification (IPC):
G06N 3/08 (2023.01)          G06N 3/096 (2023.01)
G06N 3/045 (2023.01)

(52) Cooperative Patent Classification (CPC):
G06N 3/08; G06N 3/096; G06N 3/045

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.09.2022 NL 2033139
22.12.2022 NL 2033808

(71) Applicant: NavInfo Europe B.V.
5657 DB Eindhoven (NL)

(72) Inventors:
• GOWDA, Shruthi
5657 DB Eindhoven (NL)
• ZONOOZ, Bahram
5657 DB Eindhoven (NL)
• ARANI, Elahe
5657 DB Eindhoven (NL)

(74) Representative: van Breda, Jacobus
Octrooibureau Los & Stigter B.V.
P.O. Box 20052
1000 HB Amsterdam (NL)

Remarks:
Amended claims in accordance with Rule 137(2)
EPC.

(54) **ARTIFICIAL COGNITIVE ARCHITECTURE INCORPORATING COGNITIVE COMPUTATION, INDUCTIVE BIAS AND MULTI-MEMORY SYSTEMS**

(57)  A computer-implemented method for continual task learning in an artificial cognitive architecture comprising:

a first neural network module for encoding explicit knowledge representations,
a second neural network module for encoding implicit knowledge representations, and
a memory buffer,
the method comprising the steps of:
- providing a visual data stream to the architecture;
- storing visual data samples from said visual data stream in the memory buffer,
- processing both visual data samples of the visual data stream and visual data samples from the memory buffer using the first neural network module for learning explicit knowledge representations;
- processing both samples of said visual data stream and visual data samples from the memory buffer using the second neural network module for learning implicit knowledge representations;
- transforming and sharing information between the first neural network module and the second neural network module, such as learned knowledge representations, stored within the second neural network module into the first neural network module, as well as transforming and sharing information between sub-modules of the second neural network.

Fig. 2

EP 4 343 636 A1

**Description**

The present invention pertains to a computer-implemented method for continual task learning in an artificial cognitive architecture.

Deep Neural Networks (DNNs) are evolving continuously and are being deployed in many real-world applications. That is to say, applications in which DNNs are trained to recognize and perform in a real-world environment, such as with a live data stream, rather than just recognizing objects in pictures for example. Unfortunately the present training methods used for DNNs often concern themselves with training on stationary IID (independent and identically distributed) data. In a real-world scenario, data is not static and the environment is always in flux. As such, present training methods for DNNs fall short when considering applications in real-world environments. A known improvement to IID learning is Continual learning. Continual learning is a learning paradigm where data is available as a continuous stream of information and the network has to continuously learn new information from such stream while also retaining the information previously learned from said stream. Continual learning is very useful in critical applications such as autonomous driving, as the system comprising the DNN is able to adapt to learn new traffic signs for example, or to adapt to changing weather and scenes, all without forgetting the previously learned knowledge.

There are still many fundamental shortcomings and failure modes in DNNs that limit its performance to a narrow domain of expertise. DNNs often fail to generalize to small changes in distribution and also suffer from forgetting previously incorporated information when presented with new data. More specifically, DNNs suffer from a phenomenon known to the skilled person as "*catastrophic forgetting*". This problem prevents DNNs from being capable of lifelong continual learning like humans. Humans display a superior ability to even the most advanced DNNs in acquiring new skills in real-world application while simultaneously retaining previously learned skills to a greater extent. This continual adaptability and retention of skill can be attributed to multiple factors in humans. Many theories on computational models of cognition hypothesize that, instead of a single stand-alone module, multiple modules in the brain share information to excel at a task. Modules would here each be individual DNNs. One postulation for a biological architecture involving multiple connected modules is the Connectionist Learning with Adaptive Rule Induction On-line (CLARION). An important feature of CLARION as a cognitive model is that the model distinguishes between implicit and explicit processes and focusing on capturing the interaction between these two types of processes. More specifically a CLARION architecture postulates dual sub-systems, one system processing only conscious explicit knowledge, while the other possesses unconscious implicit information.

Several techniques have already been proposed to perform effective lifelong learning. A rehearsal-based approach is known in which examples of a real-world situation are rehearsed by a model. This alleviates catastrophic forgetting somewhat. A more adequate method is known as Experience Replay (ER) in which a memory is used to retain previously seen data samples for the purpose of replaying them. This memory is better known as episodic memory. This method can be expanded on with Meta-Experience Replay [1]. This combines meta-learning with ER to decrease interference while maximizing a so called 'transfer'. In yet another method known as Gradient Episodic Memory (GEM) [2] an update objective is constrained such that the so called 'loss' on memory samples does not exceed a certain boundary compared to the previous model. One particular form of GEM is Averaged GEM (A-GEM) [3]. This method uses relaxed constraints and focuses on the average episodic memory loss. There are still more example, such as: Incremental Classifier and Representation Learning (iCaRL) [4]; DER [5] which applies distillation on the logits samples; CLS-ER [11] which emulates the fast and slow learning systems by utilizing two semantic memories, each aggregating weights at different times; SYNERgy [12] which combines dual memory ER with synaptic consolidation and uses the importance of parameters to help update parameters across the tasks; Consistency regularization in ER [13] which evaluates different forms of consistency regularizations on ER-based methods; and TARC [14] which employs self-supervised learning mechanism to continual learning to improve the generalizability of learned representations.

Many of the current techniques limit an A.I. architecture to a single stand-alone network, contrary to the proposed biological workings of the human brain. The present invention aims to explore the utility of such architectures for continual learning.

To this end the invention proposes an artificial cognitive architecture in which DNNs are trained so as to find an improved efficacy of DNNs in multiple deployment applications. These application can comprise performing, road signs detection, road condition monitoring, defect inspection, aerial survey and imaging. The invention separates itself from known standard architectures and proposed instead a multi-module. It incorporates multiple sub-modules, each sharing different knowledge with each other to develop an effective lifelong learner that has better generalization and robustness.

To this end the invention according to a first aspect provides a computer-implemented method for continual task learning in an artificial cognitive architecture comprising:

a first neural network module for encoding explicit knowledge representations, a second neural network module for encoding implicit knowledge representations itself comprising a plurality of neural network sub-modules for mutually different implicit functions, and a memory buffer, the method comprising the steps of:

- providing visual data samples from a visual data stream to the architecture; - storing visual data samples from said visual data stream in the memory buffer,
- processing both visual data samples of the visual data stream and visual data samples from the memory buffer using the first neural network module for learning explicit knowledge representations;
- processing both samples of said visual data stream and visual data samples from the memory buffer using the second neural network module for learning implicit knowledge representations;
- transforming and sharing information, such as learned knowledge representations, stored within the second neural network module into the first neural network module.

It should be understood that explicit knowledge representations are knowledge representations which are directly accessible from said first module. Implicit knowledge representations which knowledge representations which are accessible from said second neural network module, such as to the first module, via an interpretation or transformation of the therein encoded knowledge only. The above method incorporates memory replay in a multimemory system and makes implicit knowledge representations available to the first neural network for decision making using the first neural network module. It here noted that the first neural network module is a feed forward Convolutional Neural Network (CNN). The second neural network module can here consists of a plurality of separate neural networks. Further it is pointed out that mutually different implicit functions may be understood to mean that the submodules have different uses. An example of sub-modules with mutually different implicit functions are a sub-module for an inductive bias and a sub-module for implicit memory. A sub-module designed for consolidating information from one of the previously mentioned sub-modules would also be seen as different from such sub-modules.

Yet a more general description of the invention may be found in that the method proposes a novel design for continual learning. The invention digresses from standard architectures and proposes a multi-module design that is inspired from the cognitive computational architectures. It comprises multiple (sub- )modules, each sharing different knowledge with each other to develop an effective lifelong learner that has better generalization and robustness. The inductive bias learner offers a global high-level context, helping to generate better representations. Further, sharing of consolidated knowledge from the memory sub-modules helps in regularizing, thus mitigating forgetting.

Optionally, the second module comprises a plurality of neural network sub-modules amongst which are a first and second sub-module arranged to process visual information, such as the samples of the visual data stream and the samples from the memory buffer, in parallel wherein the method comprises the steps of:

- consolidating knowledge from the first neural network module (NE) in a first sub-module (NIM) of the plurality of neural network sub-modules of the second module (NI) as an implicit memory;
- processing an implicit inductive bias using both the visual data stream and visual data samples from the memory buffer in a second sub-module (NIB) of the plurality of neural network sub-modules of the second module (NI).

This division of sub-module tasks appears to improves on other digital hippocampus and neocortex emulations further improving memory retention while allowing the first neural network module to rapidly incorporate new experiences. It is noted that the inductive bias network, here the second sub-module, adds the relevant prior and contextual information and helps in producing generic representations.

Further it is possible to provide the plurality of neural networks with a third sub-module, wherein the method comprises the step of:
consolidating information from the second sub-module within the third sub-module.

This beneficially retains intimations even if the implicit bias itself is trained towards other tasks over time, allowing also for the rapid regaining of partially lost task functionality over time. This makes critical forgetting more rare, and allows the network to retain its function even if later training events for such task become rare.

In yet a further option, the method includes the step of transforming and sharing learned knowledge representations from the second neural network module into the first neural network module and vice versa, comprises sharing information from the first, second and third sub-modules into the first neural network module. This allows the second module to act as the decision making neural network, wherein the second neural network is influenced by the collective implicit memory for its functioning. That is to say that the final model for inference is the implicit, semantic memory module.

In yet another example the method may comprise the step of: consolidating knowledge from the first neural network module in a first sub-module occurs at a predetermined interval, and wherein information from a consolidated learning of first sub-module is transferred to both the first module and second sub-module. Beneficially, this improves in information retention.

Another improvement in information retention is achieved by for the first module and second sub-module learning on their own modality, that is to say RGB-information and shape information, with a supervised cross entropy loss on both the samples of the visual data stream and the samples of the memory buffer.

For memory replay it is noted that any memory buffer has a limited capacity. As such, the method may comprise supplementing the memory buffer continuously or intermittently with new samples from the visual data stream to replace already present samples within said memory buffer. The method could beneficially apply a logit loss between present samples and new samples. That is to say, a mathematical optimization function governing the replacement chance and rate of randomized memory samples by new memory samples.

Separately, it can be noted that the shared information between the first and second neural network module concerns the sharing of knowledge that was built up within each network module, such as within each sub-module. Between explicitly and implicitly available information a step of transformation or interpretation of such shared information is required. In order to balance the impact of the shared on each of the modules the method can be provided with the step of governing the information sharing by a knowledge sharing loss objective. In addition to the above it was found that employing a minimum Mean Squared Error as the objective for all the knowledge sharing losses provides exemplary results for simultaneously strengthening memory retention and improving the speed of learning.

In yet another example, compatible with any previous option, the method may comprise the step of: providing shape supervision to the first module by enforcing a decision space similarity constraint for aligning probability distributions of the first module and the second sub-module.

The person skilled in the art will understand that there are various routes available for providing shape supervision. A decision space similarity constraint can be a shape similarity constraint. More specifically the method may use the second neural network module for decision making based on the visual data stream.

According to a second aspect of the invention there is provided a computer program product comprising instructions which, when the program is executed by a computer, cause the computer to carry out the method according to the first aspect of the invention.

According to a third aspect of the invention there is provided an at least partially autonomous driving system comprising at least one camera designed for providing a visual data stream for visual data samples, and a computer designed for classifying and/or detecting objects using:

i) the artificial cognitive architecture according to the first aspect of the invention, wherein the cognitive architecture continues to train the first neural network module, or

ii) the first neural network module, wherein said first neural network (NE) has been trained using method according to the first aspect of the invention.

As a matter of definition:

the first sub-module is also known as a semantic memory.
The second sub-module is also known as an inductive bias learner.
The third sub-module is also referred to as an inductive semantic memory.

Hereinafter the invention is described in more detail in reference to the following figure:

Fig. 1    shows an CLL++ architecture according to a first embodiment of the invention;
Fig. 2    shows an alternative architecture.

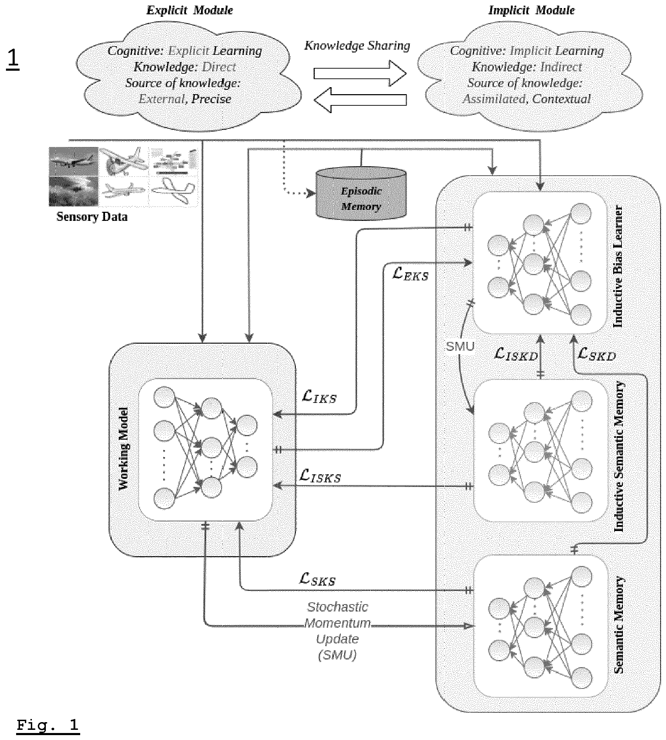

Figure 1 schematically shows a digital architecture for a so called "Cognitive Continual Learner (CCL++)". The CCL++ architecture consists of two modules, an explicit module and an implicit module. The explicit module has a single working model (WM) and processes the incoming direct visual data. The implicit module consists of three submodules, namely the inductive bias learner (IBL), the inductive semantic memory (ISM) and the semantic memory (SM) that share the other relevant information with the working module. While the explicit module learns to produce better representation on current tasks, the implicit module serves to serves for better regularization and to improve generalization and retention capability. WM, IBL, ISM and SM are each themselves neural networks. IBL, ISM and SM being submodules of the greater implicit module.

The explicit working module is represented by a feed forward CNN network $N_{WM}$. In the implicit module, a sub-module, semantic memory $N_{SM}$, consolidates knowledge at stochastic intervals from the working model $N_{WM}$ in the explicit module. The other sub-module, the inductive bias learner $N_{IBL}$, processes the data and extracts indirect prior information. Inductive bias learner learns the shape information, which acts as a different perspective to the original visual data; thus helping in producing more generic representations. The third sub-module consolidates information from the inductive bias learner and is $N_{ISM}$. The inductive semantic memory, assimilates and shares the consolidated knowledge and acts as a regularizer to further mitigate forgetting. NWM processes the RGB data, NSM consolidates the information from the working module at an update frequency. NIBL learns from the shape data and NISM consolidates the shape information, f represents the combination of the encoder and the classifier and $\theta_{WM}$, $\theta_{SM}$, $\theta_{IBL}$ and $\theta_{ISM}$ are the parameters of the four networks.

A CL classification has a sequence of tasks T (t in {1,2...T}) and during each task, samples $x_c$ and their corresponding labels $y_c$ are drawn from the current task data Dt. Further, for every task after the first one, a random batch of exemplars are sampled from the episodic memory (buffer), $x_b$. A reservoir-based sampling is incorporated to replay the previous samples. Each of the networks $N_{WM}$ and $N_{IBL}$ learn on its own modality with the supervised cross entropy loss on both the current samples and the buffer samples.

$$\mathcal{L}_{Sup_{WM}} = \mathcal{L}_{CE}(f(x_c; \theta_{WM}), y_c) + \mathcal{L}_{CE}(f(x_b; \theta_{WM}), y_b)$$

$$\mathcal{L}_{Sup_{IBL}} = \mathcal{L}_{CE}(f(x_c; \theta_{IBL}), y_c) + \mathcal{L}_{CE}(f(x_b; \theta_{IBL}), y_b)$$

Additionally, a logit loss between the current and previous samples is applied on the memory samples.
The Knowledge Sharing (KS) objectives are designed to transfer and share information between all modules. Knowledge sharing occurs for both current samples and buffered samples.
To provide shape supervision to the working model, a decision-space similarity constraint $L_{IKS}$ is enforced to align the probability distributions of the two modules. Similarly, the IBL model receives a similarity constraint $L_{EKS}$ from the working model to further align the two models. We employ the mean square error as the objective for all the KS losses.

$$\mathcal{L}_{IKS} = \underset{x_c \sim D_t}{\mathbb{E}} \| f(x_c; \theta_{IBL}) - f(x_c; \theta_{WM}) \|_2^2$$

$$\mathcal{L}_{EKS} = \underset{x_c \sim D_t}{\mathbb{E}} \| f(x_c; \theta_{WM}) - f(x_c; \theta_{IBL}) \|_2^2$$

Moreover, the information from the slower consolidated learning of $N_{SM}$ on the buffer samples is transferred to both $N_{WM}$ and $N_{IBL}$, which further helps in information retention. To this end, the soft target knowledge from SM is distilled to WM $L_{SKS}$

$$\mathcal{L}_{SKS} = \underset{x_b \sim B}{\mathbb{E}} \| f(x_b; \theta_{SM}) - f(x_b; \theta_{WM}) \|_2^2$$

The information from the slower consolidated learning of $N_{ISM}$ on the buffer samples is transferred to both $N_{WM}$ and $N_{IBL}$, which further helps in information retention.

$$\mathcal{L}_{ISKS} = \underset{x_b \sim B}{\mathbb{E}} \| f(x_b; \theta_{ISM}) - f(x_b; \theta_{WM}) \|_2^2$$

Within the implicit module, there are two distillation losses,

$$\mathcal{L}_{SKD} = \underset{x_b \sim B}{\mathbb{E}} \| f(x_b; \theta_{SM}) - f(x_b; \theta_{IBL}) \|_2^2$$

$$\mathcal{L}_{ISKD} = \underset{x_b \sim B}{\mathbb{E}} \| f(x_b; \theta_{ISM}) - f(x_b; \theta_{IBL}) \|_2^2$$

Overall, the loss function for the explicit and implicit module is,

$$\mathcal{L}_{WM} = \mathcal{L}_{Sup_{WM}} + \lambda_{IKS}\mathcal{L}_{IKS} + \lambda_{SKS}\mathcal{L}_{SKS} + \lambda_{ISKS}\mathcal{L}_{ISKS}$$

$$\mathcal{L}_{IBL} = \mathcal{L}_{Sup_{IBL}} + \lambda_{EKS}\mathcal{L}_{EKS} + \lambda_{SKD}\mathcal{L}_{SKD} + \lambda_{ISKD}\mathcal{L}_{ISKD}$$

There are two sub-modules in the implicit module. The memory sub-modules, $N_{SM}$ and $N_{ISM}$ are stochastically updated at a rate r with decay parameter $\alpha$.

$$\theta_{SM} \leftarrow \mathcal{SMU}(\theta_{WM}; \alpha)$$

$$\theta_{ISM} \leftarrow \mathcal{SMU}(\theta_{IBL}; \alpha)$$

where SMU is the stochastic momentum update

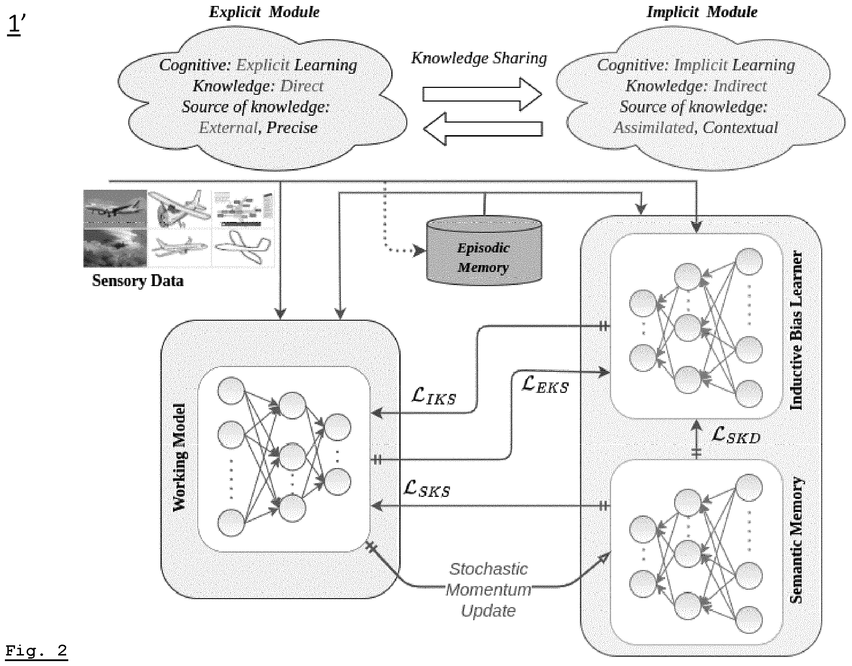

Figure 2 schematically shows an alternative digital architecture for the "Cognitive Continual Learner (CCL++)". In this version the so called inductive semantic memory is absent. This version is also a Cognitive Continual Learner, but can instead be referred to as CCL without the ++ which is indicative of the additional feature and additional network interactions. That is to say the manner in which the modules are updated differs from that the architecture in Figure 1.

With only three networks the loss functions, a reservoir-based sampling is still incorporated to replay the previous samples. Each of the networks $N_{WM}$ and $N_{IBL}$ learn on its own modality with the supervised cross entropy loss on both the current samples and the buffer samples.

$$\mathcal{L}_{Sup_{WM}} = \mathcal{L}_{CE}(f(x_c; \theta_{WM}), y_c) + \mathcal{L}_{CE}(f(x_b; \theta_{WM}), y_b)$$

$$\mathcal{L}_{Sup_{IBL}} = \mathcal{L}_{CE}(f(x_c; \theta_{IBL}), y_c) + \mathcal{L}_{CE}(f(x_b; \theta_{IBL}), y_b)$$

For Knowledge Sharing (KS) objectives the method here also employs the mean square error as the objective for all the KS losses.

$$\mathcal{L}_{IKS} = \mathop{\mathbb{E}}_{x_c \sim D_t} \|f(x_c; \theta_{IBL}) - f(x_c; \theta_{WM})\|_2^2$$

$$\mathcal{L}_{EKS} = \mathop{\mathbb{E}}_{x_c \sim D_t} \|f(x_c; \theta_{WM}) - f(x_c; \theta_{IBL})\|_2^2$$

The information from the slower consolidated learning of Nsmon the buffer samples is transferred to both $N_{WM}$ and $N_{IBL}$, which further helps in information retention. To this end, the soft target knowledge from SM is distilled to WM and IBL , ($L_{SKS}$ and $L_{SKD}$) to broadcast the consolidated knowledge to them.

$$\mathcal{L}_{SKS} = \mathop{\mathbb{E}}_{x_b \sim B} \|f(x_b; \theta_{SM}) - f(x_b; \theta_{WM})\|_2^2$$

$$\mathcal{L}_{SKD} = \mathop{\mathbb{E}}_{x_b \sim B} \|f(x_b; \theta_{SM}) - f(x_b; \theta_{IBL})\|_2^2$$

The overall loss functions for working model and inductive bias learner are as follows:

$$\mathcal{L}_{WM} = \mathcal{L}_{Sup_{WM}} + \lambda_{IKS}\mathcal{L}_{IKS} + \lambda_{SKS}\mathcal{L}_{SKS}$$

$$\mathcal{L}_{IBL} = \mathcal{L}_{Sup_{IBL}} + \lambda_{EKS}\mathcal{L}_{EKS} + \lambda_{SKD}\mathcal{L}_{SKD}$$

All the lamdas are here also the loss balancing weights.

The other sub-module of the implicit module, semantic memory, is updated with a stochastic momentum update (SMU) at a rate of r, and taking an exponential moving average of the weights of the working model with the decay factor of $\alpha$.

$$\theta_{SM} \leftarrow \mathcal{SMU}(\theta_{WM}; \alpha)$$

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers/distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible non-transitive memory-storage devices.

## REFERENCES

1. Matthew Riemer, Ignacio Cases, Robert Ajemian, Miao Liu, Irina Rish, Yuhai Tu, and Gerald Tesauro. Learning to learn without forgetting by maximizing transfer and minimizing interference. arXiv preprint arXiv:1810.11910, 2018.
2. David Lopez-Paz and Marc'Aurelio Ranzato. Gradient episodic memory for continual learning. In Advances in neural information processing systems, pages 6467-6476, 2017.
3. Arslan Chaudhry, Marc'Aurelio Ranzato, Marcus Rohrbach, and Mohamed Elhoseiny. Efficient lifelong learning with A-GEM. arXiv:1812.00420, 2018.
4. Sylvestre-Alvise Rebuffi, Alexander Kolesnikov, Georg Sperl, and Christoph H Lampert. icarl: Incremental classifier and representation learning. In Proceedings of the IEEE conference on Computer Vision and Pattern Recognition, pp. 2001-2010, 2017.

5. Pietro Buzzega, Matteo Boschini, Angelo Porrello, Davide Abati, and Simone Calderara. Dark experience for general continual learning: a strong, simple baseline. Advances in neural information processing systems, 33:15920-15930, 2020.

6. Ron Sun and Stan Franklin. Computational models of consciousness: A taxonomy and some examples, 2007.

7. Arthur Juliani, Kai Arulkumaran, Shuntaro Sasai, and Ryota Kanai. On the link between conscious function and general intelligence in humans and machines. arXiv preprint arXiv:2204.05133,2022

8. Judea Pearl and Dana Mackenzie. The book of why: the new science of cause and effect. Basic books, 2018.

9. Shruthi Gowda, Bahram Zonooz, and Elahe Arani. Inbiased: Inductive bias distillation to improve generalization and robustness through shape-awareness. arXiv preprint arXiv:2206.05846, 2022.

10. Dharshan Kumaran, Demis Hassabis, and James L McClelland. What learning systems do intelligent agents need? complementary learning systems theory updated. Trends in cognitive sciences, 20 (7):512-534, 2016.

11. Elahe Arani, Fahad Sarfraz, and Bahram Zonooz. Learning fast, learning slow: A general continual learning method based on complementary learning system. In International Conference on Learning Representations, 2022.

12. Fahad Sarfraz, Elahe Arani, and Bahram Zonooz. Synergy between synaptic consolidation and experience replay for general continual learning. arXiv preprint arXiv:2206.04016, 2022.

13. Prashant Bhat, Bahram Zonooz, and Elahe Arani. Consistency is the key to further mitigating catastrophic forgetting in continual learning. arXiv preprint arXiv:2207.04998, 2022.

14. Prashant Bhat, Bahram Zonooz, and Elahe Arani. Task agnostic representation consolidation: a self-supervised based continual learning approach. arXiv preprint arXiv:2207.06267, 2022.

**Claims**

1. A computer-implemented method for continual task learning in an artificial cognitive architecture (1) comprising:

   a first neural network module for encoding explicit knowledge representations,
   a second neural network module for encoding implicit knowledge representations itself comprising a plurality of neural network sub-modules for mutually different implicit functions, and
   a memory buffer,
   the method comprising the steps of:

   - providing a visual data stream to the architecture;
   - storing visual data samples from said visual data stream in the memory buffer ,
   - processing both visual data samples of the visual data stream and visual data samples from the memory buffer using the first neural network module for learning explicit knowledge representations;
   - processing both samples of said visual data stream and visual data samples from the memory buffer using the second neural network module for learning implicit knowledge representations;
   - transforming and sharing information between the first neural network module and the second neural network module, as well as transforming and sharing information between sub-modules of the second neural network.

2. The method according to claim 1, wherein the plurality of neural network sub-modules comprise a first and second sub-module wherein the method comprises the steps of:

   - consolidating knowledge from the first neural network module in a first sub-module of the plurality of neural network sub-modules of the second module as an implicit memory, such as through stochastic momentum updates;
   - processing an implicit inductive bias using both the visual data stream and visual data samples from the memory buffer in a second sub-module of the plurality of neural network sub-modules of the second module.

3. The method according to claim 2, wherein the plurality of neural network sub-modules comprises a third sub-module, and wherein the method comprises the step of:
   consolidating information from the second sub-module within the third sub-module, such as through stochastic momentum updates.

4. The method according to claim 3, wherein the third sub-module acts as a regularizer.

**5.** The method according to any one of claims 2, 3 and 4, wherein the step of transforming and sharing learned knowledge representations from the second neural network module into the first neural network module comprises sharing information from the first, second and third sub-modules into the first neural network module.

**6.** The method according to claim 2, 3, 4 or 5, wherein the step of
consolidating knowledge from the first neural network module in a first sub-module occurs at a regular interval, and wherein information from a consolidated learning of first sub-module is transferred to both the first module and second sub-module.

**7.** The method according to any one of claims 2-6, wherein the first module and second sub-module learn on their own modality with a supervised cross entropy loss on both the samples of the visual data stream and the samples of the memory buffer.

**8.** The method according to any one of claims 1-7, wherein the memory buffer is continuously or intermittently supplemented with new samples from the visual data stream replacing already present samples within said memory buffer, and wherein the method comprises:
applying a logit loss between present samples and new samples.

**9.** The method according to any one of claims 1-8, wherein the step of sharing information between the first and second module is governed by a knowledge sharing loss objective.

**10.** The method according to claim 9, wherein a minimum Mean Squared Error is employed as the objective for all the knowledge sharing losses.

**11.** The method according to any one of claims 1-10, comprising the step of:
using the second neural network module for decision making based on the visual data stream.

**12.** A computer program product comprising instructions which,
when the program is executed by a computer, cause the computer to carry out the method of any one of claims 1-11.

**13.** An at least partially autonomous driving system comprising

at least one camera designed for providing a visual data stream for visual data samples, and
a computer designed for classifying and/or detecting objects using:

i) the artificial cognitive architecture according to any one of claims 1-11, wherein the cognitive architecture continues to train the first neural network module, and/or
ii) the second neural network module, wherein said second neural network has been trained together with the first module using the method according to any one of claims 1-11.


**Amended claims in accordance with Rule 137(2) EPC.**

**1.** An at least partially autonomous driving system comprising

at least one camera designed for providing a visual data stream for visual data samples, and
a computer designed for classifying and/or detecting objects using:

a computer-implemented method for continual task learning in an artificial cognitive architecture (1) comprising:

a first neural network module for encoding explicit knowledge representations,
a second neural network module for encoding implicit knowledge representations itself comprising a plurality of neural network sub-modules for mutually different implicit functions, and
a memory buffer,
the method comprising the steps of:

- providing a visual data stream to the architecture;

- storing visual data samples from said visual data stream in the memory buffer ,
- processing both visual data samples of the visual data stream and visual data samples from the memory buffer using the first neural network module for learning explicit knowledge representations;
- processing both samples of said visual data stream and visual data samples from the memory buffer using the second neural network module for learning implicit knowledge representations;

transforming and sharing information between the first neural network module and the second neural network module, as well as transforming and sharing information between sub-modules of the second neural network

wherein the cognitive architecture continues to train the first neural network module, and/or the second neural network module, wherein said second neural network has been trained together with the first module using the method.

2. The driving system according to claim 1, wherein the plurality of neural network sub-modules comprise a first and second sub-module wherein the method comprises the steps of:

- consolidating knowledge from the first neural network module in a first sub-module of the plurality of neural network sub-modules of the second module as an implicit memory through stochastic momentum updates;
- processing an implicit inductive bias using both the visual data stream and visual data samples from the memory buffer in a second sub-module of the plurality of neural network sub-modules of the second module.

3. The driving system according to claim 2, wherein the plurality of neural network sub-modules comprises a third sub-module, and wherein the method comprises the step of:
consolidating information from the second sub-module within the third sub-module through stochastic momentum updates.

4. The driving system according to claim 3, wherein the third sub-module acts as a regularizer.

5. The driving system according to any one of claims 2, 3 and 4, wherein the step of transforming and sharing learned knowledge representations from the second neural network module into the first neural network module comprises sharing information from the first, second and third sub-modules into the first neural network module.

6. The driving system according to claim 2, 3, 4 or 5, wherein the step of consolidating knowledge from the first neural network module in a first sub-module occurs at a regular interval, and wherein information from a consolidated learning of first sub-module is transferred to both the first module and second sub-module.

7. The driving system according to any one of claims 2-6, wherein the first module and second sub-module learn on their own modality with a supervised cross entropy loss on both the samples of the visual data stream and the samples of the memory buffer.

8. The driving system according to any one of claims 1-7, wherein the memory buffer is continuously or intermittently supplemented with new samples from the visual data stream replacing already present samples within said memory buffer, and wherein the method comprises:
applying a logit loss between present samples and new samples.

9. The driving system according to any one of claims 1-8, wherein the step of sharing information between the first and second module is governed by a knowledge sharing loss objective.

10. The driving system according to claim 9, wherein a minimum Mean Squared Error is employed as the objective for all the knowledge sharing losses.

11. The driving system according to any one of claims 1-10, comprising the step of:
using the second neural network module for decision making based on the visual data stream.

12. A computer program product comprising instructions which,

when the program is executed by a computer of a driving system, cause the computer of said driving system to carry out the method of any one of claims 1-11.

Fig. 1

Fig. 2

Europäisches
Patentamt

European
Patent Office

Office européen
des brevets

## EUROPEAN SEARCH REPORT

Application Number

EP 22 21 7088

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JAY ZHANGJIE WU ET AL: "Label-Efficient Online Continual Object Detection in Streaming Video", ARXIV.ORG, CORNELL UNIVERSITY LIBRARY, 201 OLIN LIBRARY CORNELL UNIVERSITY ITHACA, NY 14853, 1 June 2022 (2022-06-01), XP091236811, * page 1 - page 10, paragraph 1 * * bijlage A * | 1-13 | INV. G06N3/08 G06N3/096 ADD. G06N3/045 |
| A,D | ELAHE ARANI ET AL: "Learning Fast, Learning Slow: A General Continual Learning Method based on Complementary Learning System", ARXIV.ORG, CORNELL UNIVERSITY LIBRARY, 201 OLIN LIBRARY CORNELL UNIVERSITY ITHACA, NY 14853, 10 May 2022 (2022-05-10), XP091217140, * the whole document * | 1-13 | |
| A | US 2018/330238 A1 (LUCIW MATTHEW [US] ET AL) 15 November 2018 (2018-11-15) * the whole document * | 1-13 | TECHNICAL FIELDS SEARCHED (IPC) G06N |
| T | Anonymous: "A COGNITIVE-INSPIRED MULTI-MODULE ARCHITEC- TURE FOR CONTINUAL LEARNING", , 1 February 2023 (2023-02-01), XP093057221, Retrieved from the Internet: URL:https://openreview.net/pdf?id=wPLEzBcSC7p [retrieved on 2023-06-23] * the whole document * | 1-13 | |

The present search report has been drawn up for all claims

| Place of search | Date of completion of the search | Examiner |
|---|---|---|
| The Hague | 26 June 2023 | Volkmer, Markus |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 21 7088

26-06-2023

| Patent document cited in search report | Publication date | Patent family member(s) | Publication date |
|---|---|---|---|
| US 2018330238 A1 | 15-11-2018 | CA 3061767 A1 | 15-11-2018 |
| | | CN 110914836 A | 24-03-2020 |
| | | EP 3622438 A1 | 18-03-2020 |
| | | JP 2020520007 A | 02-07-2020 |
| | | KR 20200028330 A | 16-03-2020 |
| | | US 2018330238 A1 | 15-11-2018 |
| | | WO 2018208939 A1 | 15-11-2018 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATTHEW RIEMER ; IGNACIO CASES ; ROBERT AJEMIAN ; MIAO LIU ; IRINA RISH ; YUHAI TU ; GERALD TESAURO.** Learning to learn without forgetting by maximizing transfer and minimizing interference. *arXiv preprint arXiv:1810.11910,* 2018
- **DAVID LOPEZ-PAZ ; MARC'AURELIO RANZATO.** Gradient episodic memory for continual learning. *Advances in neural information processing system,* 2017, 6467-6476
- **ARSLAN CHAUDHRY ; MARC'AURELIO RANZATO ; MARCUS ROHRBACH ; MOHAMED ELHOSEINY.** Efficient lifelong learning with A-GEM. *arXiv:1812.00420,* 2018
- **SYLVESTRE-ALVISE REBUFFI ; ALEXANDER KOLESNIKOV ; GEORG SPERL ; CHRISTOPH H LAMPERT.** icarl: Incremental classifier and representation learning. *Proceedings of the IEEE conference on Computer Vision and Pattern Recognition,* 2017, 2001-2010
- **PIETRO BUZZEGA ; MATTEO BOSCHINI ; ANGELO PORRELLO ; DAVIDE ABATI ; SIMONE CALDERARA.** Dark experience for general continual learning: a strong, simple baseline. *Advances in neural information processing systems,* 2020, vol. 33, 15920-15930
- **RON SUN ; STAN FRANKLIN.** *Computational models of consciousness: A taxonomy and some examples,* 2007
- **ARTHUR JULIANI ; KAI ARULKUMARAN ; SHUNTARO SASAI ; RYOTA KANAI.** On the link between conscious function and general intelligence in humans and machines. *arXiv preprint arXiv:2204.05133,* 2022
- **JUDEA PEARL ; DANA MACKENZIE.** The book of why: the new science of cause and effect. *Basic books,* 2018
- **SHRUTHI GOWDA ; BAHRAM ZONOOZ ; ELAHE ARANI.** Inbiased: Inductive bias distillation to improve generalization and robustness through shape-awareness. *arXiv preprint arXiv:2206.05846,* 2022
- **DHARSHAN KUMARAN ; DEMIS HASSABIS ; JAMES L MCCLELLAND.** What learning systems do intelligent agents need? complementary learning systems theory updated. *Trends in cognitive sciences,* 2016, vol. 20 (7), 512-534
- **ELAHE ARANI ; FAHAD SARFRAZ ; BAHRAM ZONOOZ.** Learning fast, learning slow: A general continual learning method based on complementary learning system. *International Conference on Learning Representations,* 2022
- **FAHAD SARFRAZ ; ELAHE ARANI ; BAHRAM ZONOOZ.** Synergy between synaptic consolidation and experience replay for general continual learning. *arXiv preprint arXiv:2206.04016,* 2022
- **PRASHANT BHAT ; BAHRAM ZONOOZ ; ELAHE ARANI.** Consistency is the key to further mitigating catastrophic forgetting in continual learning. *arXiv preprint arXiv:2207.04998,* 2022
- **PRASHANT BHAT ; BAHRAM ZONOOZ ; ELAHE ARANI.** Task agnostic representation consolidation: a self-supervised based continual learning approach. *arXiv preprint arXiv:2207.06267,* 2022